(19) Europäisches Patentamt

European Patent Office

Office européen des brevets

(11) **EP 2 665 975 B1**

(12) # EUROPEAN PATENT SPECIFICATION

(45) Date of publication and mention
of the grant of the patent:
**06.05.2020 Bulletin 2020/19**

(51) Int Cl.:
***F24F 11/00*** *(2018.01)*    ***H04Q 9/04*** *(2006.01)*

(21) Application number: **11856381.6**

(22) Date of filing: **12.12.2011**

(86) International application number:
**PCT/KR2011/009536**

(87) International publication number:
**WO 2012/099333 (26.07.2012 Gazette 2012/30)**

(54) **AIR CONDITIONER AND COMMUNICATION APPARATUS AND METHOD THEREOF**

KLIMAANLAGE UND KOMMUNIKATIONSVORRICHTUNG UND VERFAHREN DAFÜR

CLIMATISEUR ET APPAREIL DE COMMUNICATION ET PROCÉDÉ CONNEXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2011 KR 20110006536**

(43) Date of publication of application:
**27.11.2013 Bulletin 2013/48**

(73) Proprietor: **LG Electronics Inc.
Yeongdeungpo-gu
Seoul 150-721 (KR)**

(72) Inventors:
• **KIM, Juntae
Seoul 153-802 (KR)**

• **JUNG, Seunghwan
Seoul 153-802 (KR)**
• **YOUN, Sangchul
Seoul 153-802 (KR)**

(74) Representative: **Vossius & Partner
Patentanwälte Rechtsanwälte mbB
Siebertstrasse 3
81675 München (DE)**

(56) References cited:
**WO-A1-2010/109627      JP-A- H09 210 433
JP-A- 2001 091 026      JP-A- 2005 164 219
KR-A- 20090 044 776      KR-A- 20090 044 776
US-A1- 2004 010 347      US-A1- 2010 301 123**

## Description

### Technical Field

The present disclosure relates to an air conditioner, and more particularly, an air conditioner having an outdoor unit or an indoor unit capable of performing communications with a central controller using a plurality of communication methods, and a communication apparatus and method thereof.

### Background Art

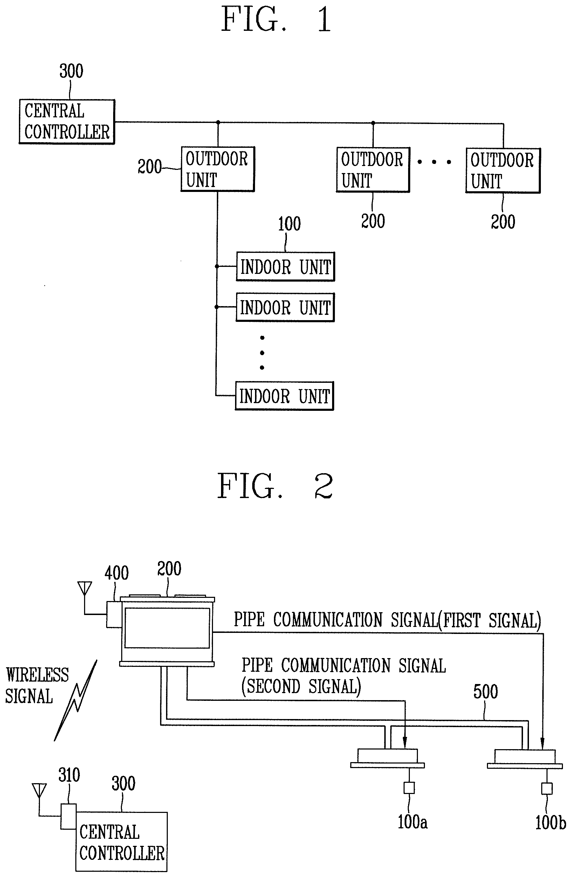

In general, an air conditioner, as shown in FIG. 1, includes an outdoor unit 200 to control distribution and circulation of a refrigerant, an indoor unit 100 connected to the outdoor unit to supply air into each indoor, and a central controller 300 connected to the outdoor unit 200 for center control of operations of the air conditioner.

The central controller 300 is provided, by a user's registration, with network information and setting information relating to the air conditioner, such as device information on the indoor unit 100 and the outdoor unit 200. The central controller 300 includes a control program capable of individually controlling each unit according to the registered setting information.

In recent time, in order to increase management efficiency of the air conditioners installed in public buildings, such as schools, offices and the like, the air conditioner generally includes the central controller 300. Also, as the performance of the outdoor unit 200 is improved, it is a trend to connect a plurality of indoor units 100 to a specific outdoor unit 200 for sharing, and integrally control the plurality of indoor units 100 and the outdoor unit 200 by the central controller 300.

The central controller 300 requires communication lines for communication with the outdoor unit 200 and the indoor unit 100. To this end, separate dedicated lines may be used, or power lines may be used by the indoor unit 100 for data transmission and reception by a power line communication method, whereby a communication line is not separately needed at the indoor unit 100. However, when a transfer path (line) such as the same pipe or the dedicated line is used as a transfer path for communication between the indoor unit 100 and the outdoor unit 200 and communication between the central controller 300 and the outdoor unit 200, signal interference may be caused between signals transferred along the transfer path.

KR 2009 0044776 relates to an air conditioner system which applies a first driving command signal to an air conditioner connected with the ventilation system and includes a control device for controlling the operation of the ventilation system and the air conditioner based on the first driving command signal. The input unit applies a second driving command signal to at least one electronic device different from the air conditioner.

## Disclosure of Invention

### Technical Problem

Therefore, to obviate those problems, an aspect of the detailed description is to provide an air conditioner capable of minimizing a signal interference between signals transferred by using the same refrigerant pipe, and a communication apparatus and method thereof.

Another aspect of the detailed description is to provide an air conditioner capable of efficiently operating a system by performing communication with a central controller using a plurality of communication methods, and a communication apparatus and method thereof.

### Solution to Problem

To achieve these and other advantages and in accordance with the purpose of the present disclosure, as embodied and broadly described herein, there is provided an air conditioner including the features of claim 1.

The communication apparatus may include a wireless communication unit to perform communication with the central controller using a wireless communication method, a signal converting unit to convert the second signal into a wireless signal corresponding to the second signal according to the wireless communication method, or convert the wireless signal into the second signal according to a preset communication method, and a communication unit to communicate with the outdoor unit or the indoor units using the first and second signals. Here, the communication unit may be a pipe communication unit or a dedicated line communication unit to perform communication using the first and second signals according to a pipe communication method or a dedicated line communication method.

The wireless communication unit may allow the communication between the outdoor units by using wireless signals corresponding to the first and second signals according to the wireless communication method. Here, the outdoor unit or indoor unit receiving the wireless signal may be installed the closest to the central controller.

To achieve these and other advantages and in accordance with the purpose of the present disclosure, as embodied and broadly described herein, there is provided a communication apparatus for an air conditioner, the air conditioner including a plurality of indoor units to perform air conditioning, at least one outdoor unit connected to the indoor units via a refrigerant pipe to drive the outdoor unit using a first signal, and a central controller to control operations of the outdoor unit and the indoor units using a second signal, wherein the communication apparatus may be installed in the outdoor unit or one of the indoor units connected to the outdoor unit to perform communication with the central controller using a wireless communication method, convert the second signal into a wireless signal corresponding to the second signal according to the wireless communication method or the wireless signal into the second signal according to a preset communication method, and communicate with the outdoor unit or the indoor unit using the first and second signals having frequency bands spaced from each other.

In accordance with one aspect of the present disclosure, the communication apparatus may include a wireless communication unit to perform communication with the central controller according to a wireless communication method, a signal converting unit to convert the second signal into a wireless signal corresponding to the second signal according to the wireless communication method or the wireless signal into the second signal according to a preset communication method, and a communication unit to communicate with the outdoor unit or the indoor unit using the first and second signals according to the preset communication method. Here, the communication unit may be a pipe communication unit or a dedicated line communication unit to perform communication using the first and second signals according to a pipe communication method or a dedicated line communication method.

In one aspect of the present disclosure, the communication unit may include a data transmission/reception portion to receive or transmit data from or to the outdoor unit or the indoor unit, and a communication signal converter to convert the data into a communication signal or the communication signal into the data.

The communication unit may further include a communication signal connection portion to connect the communication signal to the refrigerant pipe.

In one aspect of the present disclosure, the communication unit may further include a communication signal coupling portion positioned between the communication signal converter and the communication signal connection portion to filter the communication signal and block noise and serge.

The communication apparatus may allow communication between the outdoor units according to the wireless communication method. Here, the outdoor unit or indoor unit receiving the wireless signal may be installed the closest to the central controller.

To achieve these and other advantages and in accordance with the purpose of the present disclosure, as embodied and broadly described herein, there is provided a communication method for an air conditioner performed via a communication apparatus, the air conditioner including a plurality of indoor units to perform air conditioning, at least one outdoor unit connected to the indoor units via a refrigerant pipe to drive the indoor units using a first signal, a central controller to control operations of the outdoor unit and the indoor units using a second signal, and the communication apparatus to perform communication with the central controller, the method including converting by the central controller a control command into a wireless signal, transmitting the wireless signal corresponding to the second signal to at least one of the outdoor unit and the indoor units, receiving the wireless signal corresponding to the second signal to convert into the second signal, the second signal having a frequency band spaced from that of the first signal, transmitting the second signal to at least one of the outdoor unit and the indoor units, and transmitting the first signal to at least one of the outdoor unit and the indoor units.

To achieve these and other advantages and in accordance with the purpose of the present disclosure, as embodied and broadly described herein, there is provided a communication method for an air conditioner performed via a communication apparatus performing communication using a second signal, the air conditioner including a plurality of indoor units to perform air conditioning, and at least one outdoor unit connected to the indoor units via a refrigerant pipe to drive the indoor units using a first signal, the method including converting a control command into a wireless signal, transmitting the wireless signal corresponding to the second signal to the outdoor unit, converting the wireless signal corresponding to the second signal into the second signal, the second signal having a frequency band spaced from that of the first signal, transmitting the second signal from the outdoor unit to at least one of the indoor units, and transmitting the first signal from the outdoor unit to at least one of the indoor unit.

**Advantageous Effects of Invention**

In accordance with aspects of the present disclosure, as signals with different frequency bands are used for communication between an outdoor unit and an indoor unit or communication between the outdoor unit or indoor unit and a central controller, signal interference can be avoided beforehand, thereby enhancing safety of a system. Also, the outdoor unit or indoor unit may perform communication with the central controller using a plurality of communication methods including a wireless communication method and a dedicated line communication method, thereby reducing limitations due to an installation environment, which results in an increase in efficiency of a system operation.

**Brief Description of Drawings**

FIG. 1 is a block diagram schematically showing a configuration of a typical multi-type air conditioner;
FIGS. 2 to 4 are schematic views showing a configuration of an air conditioner in accordance with one exemplary embodiment;
FIG. 5A is a result view showing forms of first and second signals based on time, when the first and second signals having the same frequency are transmitted via the same refrigerant pipe;
FIG. 5B is a result view showing forms of first and second signals based on time, when the first and second signals having frequency bands spaced from each other;

FIG. 6 is a block diagram showing a configuration of a communication apparatus shown in FIGS. 2 to 4;

FIGS. 7 and 8 are schematic views showing a configuration of an air conditioner in accordance with another exemplary embodiment;

FIG. 9 is a block diagram showing a configuration of a communication apparatus shown in FIGS.7 and 8;

FIG. 10 is a flowchart schematically showing a communication method for an air conditioner in accordance with one exemplary embodiment;

FIG. 11 is a flowchart schematically showing a communication method for the air conditioner of FIG. 4;

FIG. 12 is a flowchart schematically showing a communication method for an air conditioner in accordance with another exemplary embodiment; and

FIG. 13 is a flowchart schematically showing a communication method for the air conditioner of FIG. 8.

## Mode for the Invention

Embodiments of the present disclosure will be described below in detail with reference to the accompanying drawings where those components are rendered the same reference number that are the same or are in correspondence, regardless of the figure number, and redundant explanations are omitted. In describing the present disclosure, if a detailed explanation for a related known function or construction is considered to unnecessarily divert the gist of the present disclosure, such explanation has been omitted but would be understood by those skilled in the art. The accompanying drawings are used to help easily understood the technical idea of the present disclosure and it should be understood that the idea of the present disclosure is not limited by the accompanying drawings. The idea of the present disclosure should be construed to extend to any alterations, equivalents and substitutes besides the accompanying drawings.

As shown in FIGS. 2 to 4 and FIGS. 7 and 8, an air conditioner according to this specification may include a plurality of indoor units 100 to perform air conditioning, at least one outdoor unit 200 connected to the indoor units 100 via a refrigerant pipe 500 to drive the indoor units 100 using a first signal, a central controller 300 to control operations of the outdoor unit 200 and the indoor units 100 using a second signal whose frequency band is spaced from that of the first signal, and a communication apparatus 400 provided in the outdoor unit 200 or one of the indoor units 100 connected to the outdoor unit 200 to communicate with the central controller 300 using the second signal.

Here, the communication apparatus 400 may perform wireless communication with the central controller 300. Data transmission and reception between the outdoor unit 200 and the indoor units 100 may be performed by one communication method of a pipe communication or a dedicated line communication, other than the wireless communication.

The communication apparatus 400 may preferably be provided in the outdoor unit 200 or the indoor unit 100 which is located the closest to the central controller 300. For example, in case where the communication apparatus 400 is installed in an indoor unit installed the closest to the central controller 300, when the central controller 300 transmits a control command, such as run/stop, cooling/warming, air adjustment, and the like, to the indoor unit by using the wireless communication method, the indoor unit receives the control command and operates accordingly. Here, the central controller 300 may also transmit the control command to another indoor unit in which the communication apparatus 400 is not installed. In this case, when the central controller 300 transmits the control command to the indoor unit having the communication apparatus 400 by using the wireless communication method, the indoor unit which receives the control command may forward the control command to the corresponding indoor unit without the communication apparatus 400 by using the pipe communication or dedicated line communication other than the wireless communication.

Referring to FIG. 2, a pair of first and second indoor units 100a and 100b may be connected to one outdoor unit 200, and the outdoor unit 200 may be provided with a communication apparatus 400. A central controller 300 may include a wireless communication unit 310.

The outdoor unit 200 may transmit a control command to the second indoor unit 100b as a first signal corresponding to a pipe communication signal by employing a pipe communication method. The central controller 300 may transmit the control command to the outdoor unit 200 as a wireless signal corresponding to a second signal by employing a wireless communication method. The communication apparatus 400 installed in the outdoor unit 200 may convert the wireless signal into the second signal, which is the pipe communication signal, and transmit the second signal to the first indoor unit 100a.

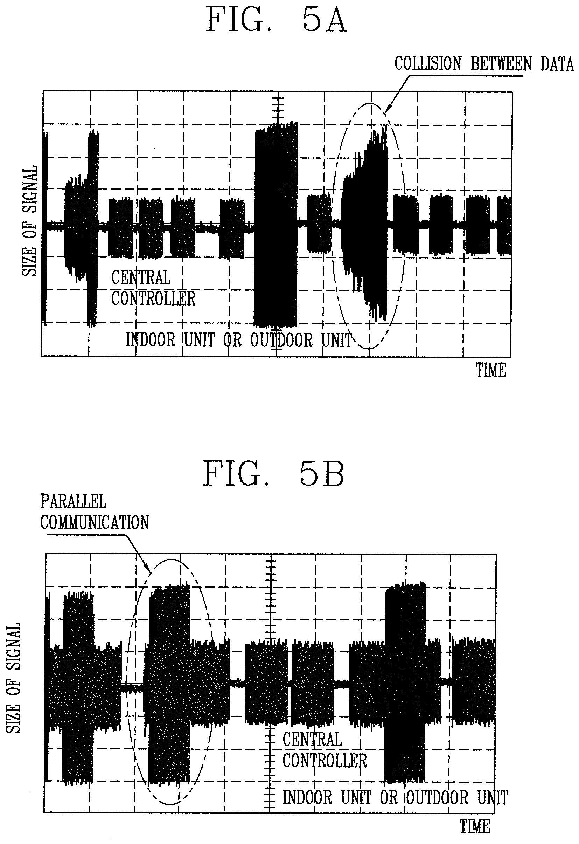

FIG. 5A is a result view showing forms of first and second signals based on time when the first and second signals having the same frequency are transmitted via the same refrigerant pipe. As shown in FIG. 5A referring to FIG. 2, it can be noticed that when the outdoor unit 200 transmits the second signal to the first indoor unit 100a and transmits the first signal having the same frequency to the second indoor unit 100b via the same refrigerant pipe 500, signal interference is caused between the first and second signals. Hence, the control command transmitted to the first and second indoor units 100a and 100b is unable to be completely restored, and accordingly the first and second indoor units 100a and 100b may erroneously operate. Here, the first and second signals have the same frequency whose center frequency is about 132 KHz.

FIG. 5B is a result view showing forms of first and second signals based on time when the first and second signals having frequency bands spaced from each other.

As shown in FIG. 5B referring to FIG. 2, it can be noticed that even when the outdoor unit 200 transmits first and second signals simultaneously to the first and second indoor units 100a and 100b, signal interference is not caused between the first and second signals. Hence, the control command transmitted to the first and second indoor units 100a and 100b is able to be completely restored, and accordingly the first and second indoor units 100a and 100b can normally operate. Here, the first and second signals have different frequencies whose center frequencies are 86 KHz and 132 KHz, respectively. The first and second frequencies belong to CENELEC A band (9-95 KHz) and CENELEC B band (95-140 KHz) of the European frequency standards.

A bandwidth (BW) without causing the interference between the first and second signals may be decided by the following Formula 1.

<Formula 1>

$$BW \geq \frac{2}{T_s}$$

Here, Ts denotes a sampling time of the first and second signals. The sampling time corresponds to a transmission time interval until transmission of the next control signal, with respect to the first and second signals. Therefore, the minimum bandwidth may be the double of an inverse number of the transmission time interval.

When the center frequencies of the first and second signals are first and second frequencies f1, f2, respectively, first and second frequency bandwidths BW1, BW2 should be smaller than (f2 - f1)/2, in order for the first and second signals to have spaced frequency bands. For the purpose, in theory, the first signal should have a value of '0' at the second frequency band and the second signal should have a value of '0' at the first frequency band. However, for a communication system in which the first signal is smaller than the second signal by a predetermined size at the second frequency band, and the second signal is smaller than the first signal by a predetermined size at the first frequency band, the signal interference between the first and second signals may be avoided. Here, the predetermined size which can avoid the interference between the first and second signals may depend on the characteristic of the system, for example, have a value below 30 dB.

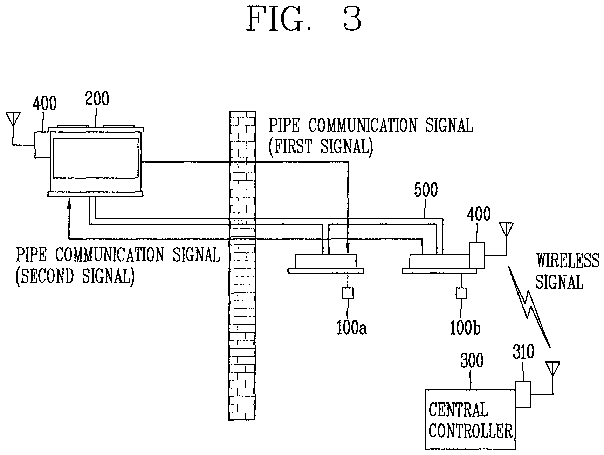

Referring to FIG. 3, a pair of first and second indoor units 100a and 100b may be connected to one outdoor unit 200 with interposing a wall or floor therebetween, and a central controller 300 may be installed inside. Here, the communication apparatus 400 may preferably be installed in the indoor unit 100b located the closest to the central controller 300. According to the illustrated embodiment, a signal attenuation due to a spaced distance can be reduced and the central controller 300 can be located inside.

The outdoor unit 200 may transmit a control command as a first signal corresponding to a pipe communication signal to the first indoor unit 100a by employing a pipe communication method. When the central controller 300 transmits the control command to the first indoor unit 100a, it may transmit the control command as a wireless signal to the second indoor unit 100b by employing a wireless communication method. Afterwards, the communication apparatus 400 installed in the second indoor unit 100b may convert the control command into a second signal corresponding to the pipe communication signal, and the second indoor unit 100b may transmit the second signal to the outdoor unit 200. Here, since the first and second signals may use frequency bands spaced from each other, no signal interference may be caused between the first and second signals even if transmitted through the same refrigerant pipe 500.

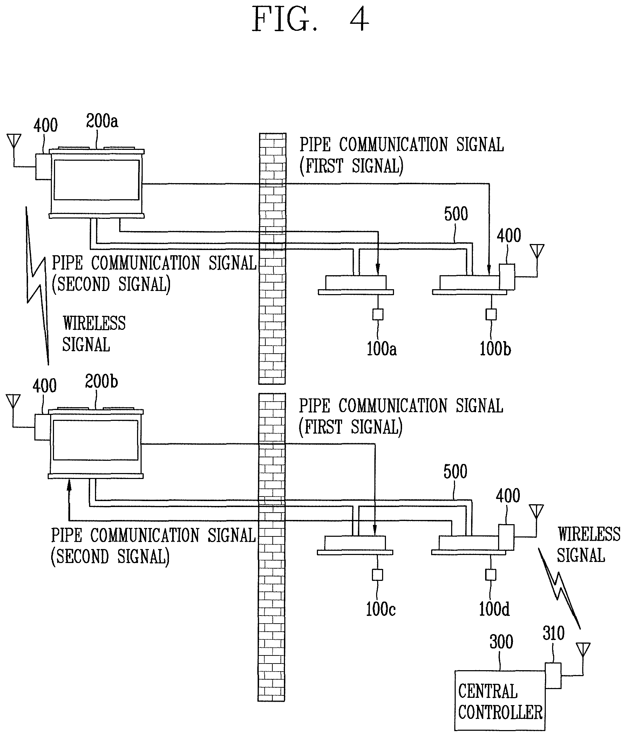

Referring to FIG. 4, two pairs of indoor units, namely, first and second indoor units 100a and 100b and third and fourth indoor units 100c and 100d may be connected to a pair of first and second outdoor units 200a and 200b, respectively, with interposing a wall or floor therebetween, and the first and second outdoor units 200a and 200b and the second and fourth indoor units 100b and 100d may include a communication apparatus 400, respectively. A central controller 300 may include a wireless communication unit 310 and be installed inside.

The first and second outdoor units 200a and 200b may transmit a control command as a first signal corresponding to a pipe communication signal to the first and third indoor units 100a and 100c, respectively, using a pipe communication method.

When transmitting the control command to the first indoor unit 100a, the central controller 300 may convert the control command into a wireless signal and transmit the wireless signal to the fourth indoor unit 100d, which is located the closest to the central controller 300, using a wireless communication method. The communication apparatus 400 installed in the fourth indoor unit 100d may convert the wireless signal into a second signal as a pipe communication signal, and the fourth indoor unit 100d may transmit the second signal to the second outdoor unit 200b connected thereto via the refrigerant pipe 500. After reception of the second signal, the second outdoor unit 200b may convert the second signal into the wireless signal and transmit the wireless signal to the first outdoor unit 200a connected to the first indoor unit 100a. Upon reception of the wireless signal, the first outdoor unit 200a may convert the wireless signal into the second signal to transmit to the first indoor unit 100a.

Here, since the first and second signals use the frequency bands spaced from each other, no signal interference may be caused even if transmitted through the same refrigerant pipe 500.

The communication apparatus 400 may perform communications with the first and second outdoor units 200a and 200b using the first and second signals. Assuming that the second outdoor unit 200b is a master and the first outdoor unit 200a is a slave, the second outdoor unit 200b may transmit the first signal to the first outdoor unit 200a in form of the wireless signal. Also, the second outdoor unit 200b may transmit the second signal transmitted from the central controller 300 to the first outdoor unit 200a in form of the wireless signal.

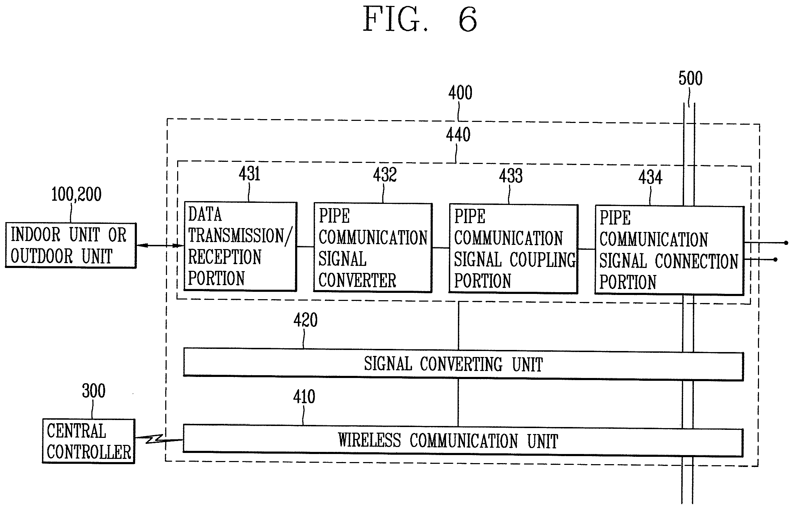

Referring to FIG. 6, in an air conditioner including a plurality of indoor units 100 to perform air conditioning, at least one outdoor unit 200 connected to the indoor units 100 via a refrigerant pipe 500 to drive the indoor units 100 using a first signal, a central controller 300 to control operations of the outdoor unit 200 and the indoor units 100 using a second signal, and a communication apparatus to perform communication with the central controller 300, the communication apparatus 400 for the air conditioner may be installed in the outdoor unit 200 or one of the indoor units 100 connected to the outdoor unit 200. The communication apparatus 400 may perform communication with the central controller 300 by a wireless communication method, and convert the second signal into a wireless signal corresponding to the second signal according to the wireless communication method or the wireless signal into the second signal according to a pipe communication method. The communication apparatus 400 may perform communication with the outdoor unit or the indoor unit using the first and second signals having frequency bands spaced from each other.

The communication apparatus 400 may include a wireless communication unit 410 to communicate with the central controller 300 by the wireless communication method, a signal converting unit 420 to convert the second signal into a wireless signal corresponding to the second signal according to the wireless communication method or the wireless signal into the second signal according to the pipe communication method, and a pipe communication unit 430 to communicate with the outdoor unit or the indoor unit using the first and second signals by the pipe communication method.

The wireless communication unit 410 may receive an operation command or control data for the outdoor unit 200 or the indoor unit 100 from the central controller 300 and forward the operation command or control data. The wireless communication unit 410 may employ any type of wireless communication method typically used. For example, the wireless communication unit 410 may use wireless LAN, RF communication, Bluetooth, Infrared Data Association (IrDA) communication and the like.

The pipe communication unit 430 may include a data transmission/reception portion 431 to receive or transmit data from or to the outdoor unit 200 or the indoor unit 100, and a pipe communication signal converter 432 to convert the data into the pipe communication signal or the pipe communication signal into the data. A carrier frequency of the pipe communication signal may be set by considering a characteristic of the refrigerant pipe 500. That is, a frequency signal is connected to the refrigerant pipe 500 and a signal attenuation and external noise interference are reduced, thereby allowing use of a frequency band with higher communication reliability.

The data transmission/reception portion 431 may receive data, such as operation data and the like, from the outdoor unit 200 or the indoor unit 100, and transfer the data to the pipe communication signal converter 432. The pipe communication signal converter 432 may convert the data into the pipe communication signal to transfer to another outdoor unit or indoor unit via the refrigerant pipe.

The pipe communication unit 430 may further include a pipe communication signal connection portion 434 to connect the pipe communication signal to the refrigerant pipe 500. The pipe communication signal connection portion 434 may include a magnetic core to form a predetermined inductance with respect to the pipe communication signal so as to enhance communication reliability.

The pipe communication unit 430 may further include a pipe communication signal coupling portion 433. The pipe communication signal coupling portion 433 may be provided between the pipe communication converter 432 and the pipe communication signal connection portion 434 to filter the pipe communication signal and block noise and serge. The pipe communication signal coupling portion 433 may filter a signal by employing a non-isolated type inductor and a capacitor, or block external noise and serge by employing a transformer-isolated type transformer.

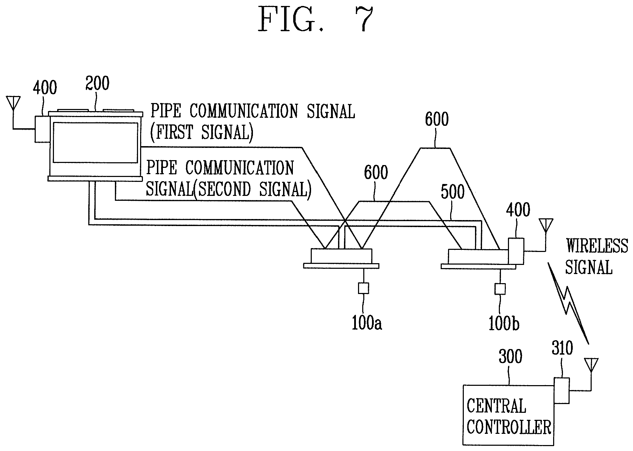

Referring to FIG. 7, a pair of first and second indoor units 100a and 100b may be connected to one outdoor unit 200 via a refrigerant pipe 500. The outdoor unit 200 and the indoor units 100a and 100b may transmit and receive data via a dedicated line 600. A central controller 300 may include a wireless communication unit 310 and be installed adjacent to the second indoor unit 100b.

The outdoor unit 200 may transmit a control command as a first signal corresponding to a dedicated line communication signal to the second indoor unit 100b using a dedicated line communication method. When the central controller 300 transmits the control command to the first indoor unit 100a, the central controller 300 may convert the control command into a wireless signal by using the wireless communication unit 310, and transmit the wireless signal to the second indoor unit 100b. The communication apparatus 400 installed in the second indoor unit 100b may convert the wireless signal into a second signal as a dedicated line communication signal. The second indoor unit 100b may transmit the converted second signal to the first indoor unit 100a. Here, since the first and second signals use frequency bands spaced from each other, no signal interference may be caused between the first and second signals even if transmitted via the same dedicated line 600.

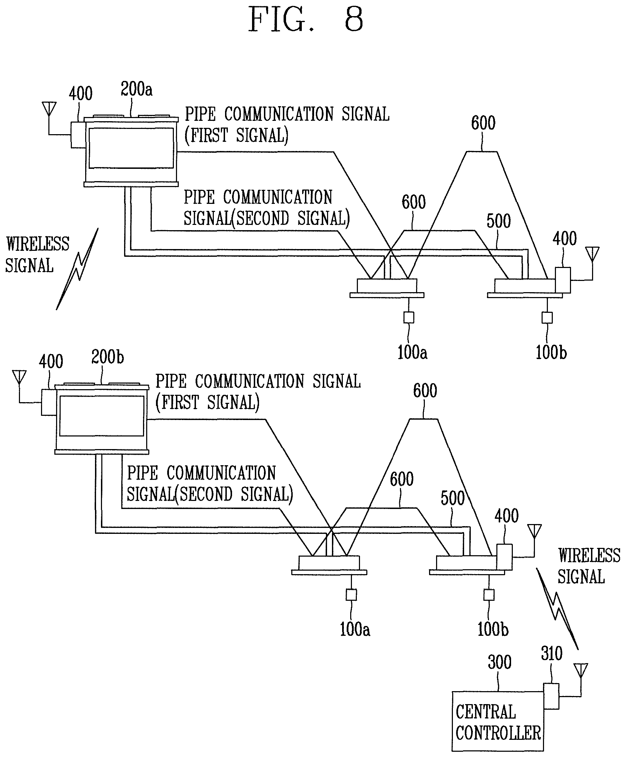

Referring to FIG. 8, two pairs of indoor units, namely, first and second indoor units 100a and 100b and third and fourth indoor units 100c and 100d may be connected to a pair of first and second outdoor units 200a and 200b, respectively. The first and second outdoor unit 200a and 200b and the second and fourth indoor units 100b and 100d may include a communication apparatus 400, respectively. The central controller 300 may include a wireless communication unit 310 and be installed inside.

The first outdoor unit 200a may transmit a control command to the second indoor unit 100b in form of (as) a first signal corresponding to a dedicated line communication signal using a dedicated line communication method. When the central controller 300 transmits the control command to the indoor unit 100a, the central controller 300 may convert the control command into a wireless signal and transmit the wireless signal to the fourth indoor unit 100d the closest to the central controller 300 using a wireless communication method. The communication apparatus 400 installed in the fourth indoor unit 100d may convert the wireless signal into a second signal corresponding to a dedicated line communication signal. The fourth indoor unit 100d may then transmit the second signal as the dedicated line communication signal to the second outdoor unit 200b connected thereto via the dedicated line 600. Upon reception of the second signal, the second outdoor unit 200b may convert the second signal into the wireless signal to transmit to the first outdoor unit 200a connected to the first indoor unit 100a. Upon reception of the wireless signal, the first outdoor unit 200a may convert the wireless signal into the second signal to transmit to the first indoor unit 100a. Here, since the first and second signals use frequency bands spaced from each other, no signal interference may be caused between the first and second signals even if transmitted via the same dedicated line 600.

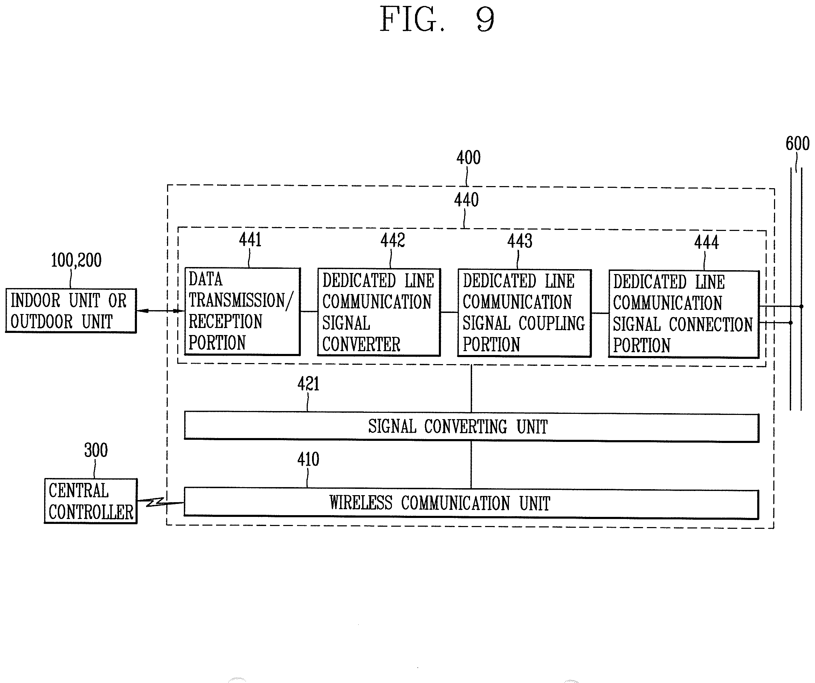

Referring to FIG. 9, an air conditioner according to the present disclosure may include a plurality of indoor units 100 to perform air conditioning, at least one outdoor unit 200 connected to the indoor units 100 via a refrigerant pipe to drive the indoor units 100 using a first signal, a central controller 300 to control operations of the outdoor unit 200 and the indoor units 100, and a communication apparatus 400 to perform communication with the central controller 300. The communication apparatus 400 for the air conditioner may be installed in the outdoor unit 200 or one of the indoor units 100 connected to the outdoor unit 200 and may communicate with the central controller 300 by a wireless communication method. In detail, the communication apparatus 400 may convert the second signal into a wireless signal corresponding to the second signal according to the wireless communication method or the wireless signal into the second signal according to a dedicated line communication method. Also, the communication apparatus 400 may communicate with the outdoor unit 200 or the indoor unit 100 using first and second signals having frequency bands spaced from each other.

The communication apparatus 400 may include a wireless communication unit 410 to communicate with the central controller 300 by the wireless communication method, a signal converting unit 421 to convert the second signal into a wireless signal corresponding to the second signal according to a wireless communication method or the wireless signal into the second signal according to a dedicated line communication method, and a dedicated line communication unit 440 to communicate with the outdoor unit 200 or the indoor unit 100 using the first and second signals by the dedicated line communication method. Here, examples of the dedicated line communication methods may include serial communication, parallel communication, LAN communication and the like, and generally RS-485 communication method is employed.

The dedicated line communication unit 440 may include a data transmission/ reception portion 441 to receive or transmit data from or to the outdoor unit 200 or the indoor unit 100, and a dedicated line communication signal converter 442 to convert the data into the dedicated line communication signal or vice versa. Also, the dedicated line communication unit 440 may further include a dedicated line communication signal connection portion 444 to connect the dedicated line communication signal to the dedicated line. The dedicated line communication unit 440 may further include a dedicated line communication signal coupling portion 443. The dedicated line communication signal coupling portion 443 may be provided between the dedicated line communication signal converter 442 and the dedicated line communication signal connection portion 444, and filter the dedicated line communication signal.

The data transmission/reception portion 441 may receive data from the outdoor unit 200 or the indoor unit 100 to transfer to the dedicated line communication signal converter 442, or transfer data received from the dedicated line communication signal converter 442 to the outdoor unit 200 or the indoor units 100. The dedicated line communication signal converter 442 may convert the data into the dedicated line communication signal or the dedicated line communication signal into the data to transfer to the data transmission/reception portion 441.

The dedicated line communication signal coupling portion 443 may block an affection of external noise or serge, or filter the dedicate line communication signal.

The dedicated line communication signal connection portion 444 may include a matching element to connect the dedicated line communication signal to the dedicated line.

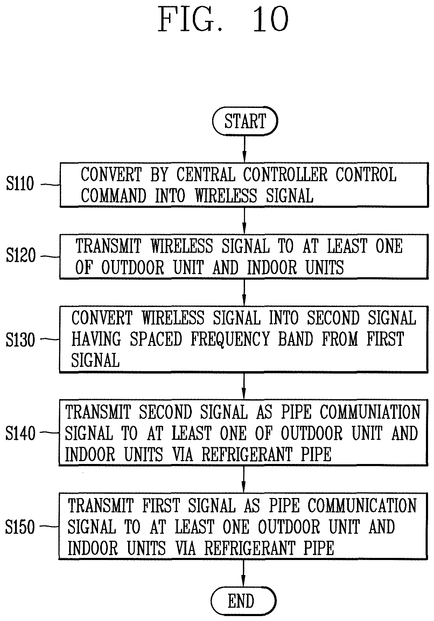

Referring to FIG. 10, in an air conditioner including a plurality of indoor units to perform air conditioning, at least one outdoor unit connected to the indoor units via a refrigerant pipe to drive the indoor units using a first signal as a pipe communication signal, a central controller to control operations of the outdoor unit and the indoor units using a second signal, and a communication apparatus to communicate with the central controller, a communication method for the air conditioner via the communication apparatus may include converting by the central controller a control command into a wireless signal (S110), transmitting the wireless signal corresponding to the second signal to at least one of the indoor units and the outdoor unit (S120), converting the wireless signal corresponding to the second signal into the second signal corresponding to a pipe communication signal, which has a frequency band spaced from that of the first signal (S130), transmitting the second signal as the pipe communication signal to at least one of the outdoor unit and the indoor units via the refrigerant pipe (S140), and transmitting the first signal as the pipe communication signal to at least one of the outdoor unit and the indoor units via the refrigerant pipe (S150).

The corresponding outdoor unit or indoor unit receiving the control command may operate based on the control command. Here, the wireless communication method may be at least one of common wireless communication methods, such as wireless LAN, RF communication, Bluetooth, IrDA communication and the like. Hereinafter, description will be given with reference to FIGS. 2 to 4 and FIG. 6, which show the configuration of the apparatus according to this specification.

Referring to FIG. 2, the pair of first and second indoor units 100a and 100b may be connected to the one outdoor unit 200, and the outdoor unit 200 may include the communication apparatus 400. Also, the central controller 300 may include the wireless communication unit 310. Here, the wireless communication unit 310 may convert a control command into a wireless signal (S110), and the central controller 300 may transmit the control command to the outdoor unit 200 using a wireless communication method (S 120). The outdoor unit 200 may convert the control command into a second signal as a pipe communication signal having a frequency band spaced from that of a first signal (S130), and transmit the converted second signal as the pipe communication signal to the first indoor unit 100a via the refrigerant pipe 500 (S140). The outdoor unit 200 may transmit the first signal as the pipe communication signal to the second indoor unit 100b via the refrigerant pipe 500 (S150).

Referring to FIG. 3, the pair of first and second indoor units 100a and 100b may be connected to the one outdoor unit 200 with interposing a wall or floor therebetween, and the central controller 300 may be installed inside. The communication apparatus 400 may preferably be installed in the indoor unit 100b located the closest to the central controller 300. This is advantageous in view of reducing signal attenuation due to a spacing distance and positioning the central controller 300 inside. For example, for transmitting a control command to the first indoor unit 100a, the central controller 300 may convert the control command into a wireless signal by using the wireless communication unit 310 installed therein (S110). The converted wireless signal may be transmitted to the communication apparatus 400 installed in the second indoor unit 100b (S120). The control command received by the communication apparatus 400 may be converted into a second signal as a pipe communication signal (S130). Afterwards, the second indoor unit 100b may transmit the converted second signal, which has a frequency band spaced from that of a first signal, to the outdoor unit 200 via the refrigerant pipe 500 using the pipe communication method (S140). The outdoor unit 200 may transmit the first signal to the first indoor unit 100a via the refrigerant pipe 500 using a pipe communication method (S150).

Referring to FIG. 4, two pairs of indoor units, namely, first and second indoor units 100a and 100b and third and fourth indoor units and 100d may be connected to a pair of first and second outdoor units 200a and 200b with interposing a wall or floor therebetween, and the outdoor units 200a and 200b and the second and fourth indoor units 100b and 100d may include a communication apparatus 400, respectively. A central controller 300 may include a wireless communication unit 310 and be installed inside. For example, for transmitting a control command to the first indoor unit 100a, the central controller 300 may convert the control command into a wireless signal and transmit the wireless signal to the fourth indoor unit 100d located the closest to the central controller 300 using a wireless communication method (S110, S120). The communication apparatus 400 installed in the fourth indoor unit 100d may convert the wireless signal into a second signal as a pipe communication signal (S130). The fourth indoor unit 100d may transmit the converted second signal, which has a frequency band spaced from that of a first signal, to the second outdoor unit 200b via the refrigerant pipe 500 using the pipe communication method (S140). The second outdoor unit 200b may transmit the first signal to the third indoor unit 100c via the refrigerant pipe 500 using a pipe communication method (S150).

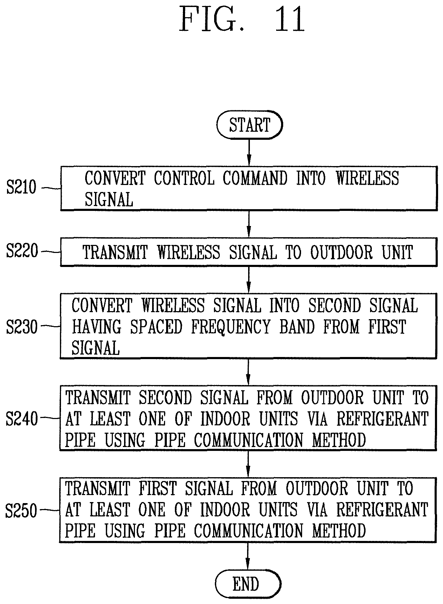

Referring to FIG. 11, in an air conditioner including a plurality of indoor units to perform air conditioning, and at least one outdoor unit connected to the indoor units via a refrigerant pipe to drive the indoor units using a first signal, a communication method for the air conditioner via a communication apparatus performing communication using a second signal may include converting a control command into a wireless signal (S210), transmitting the wireless signal corresponding to the second signal to the outdoor unit (S220), converting the wireless signal corresponding to the second signal into the second signal, which has a frequency band spaced from that of the first signal (S230), transmitting the converted second signal from the outdoor unit to at least one of the indoor units via the refrigerant pipe using the pipe communication method (S240), and transmitting the first signal from the outdoor unit to at least one of the indoor units via the refrigerant pipe using a pipe communication method (S250).

Referring to FIG. 4, upon reception of the second signal, the outdoor unit 200b may convert the second signal into the wireless signal to transmit to the first outdoor unit 200a connected to the first indoor unit 100a (S210, S220). The first outdoor unit 200a may convert the wireless signal corresponding to the second signal into the second signal, which has a frequency band spaced from that of the first signal (S230). The first output unit 200a may transmit the converted second signal to the first indoor unit 100a via the refrigerant pipe 500 using the pipe communication method (S240), and transmit the first signal to the second indoor unit 100b via the refrigerant pipe 500 using the pipe communication method (S250).

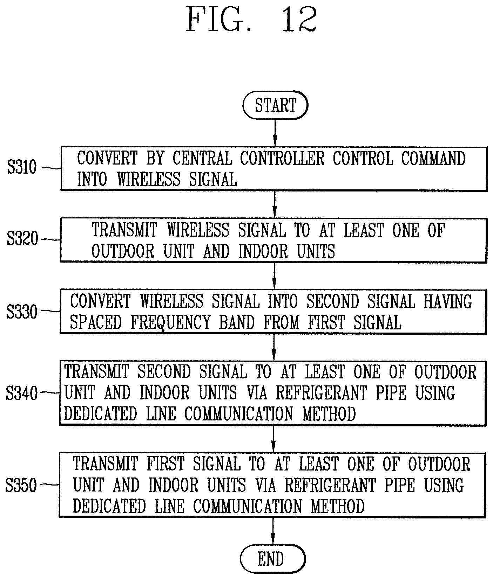

Referring to FIG. 12, in an air conditioner including a plurality of indoor unit to perform air conditioning, at least one outdoor unit connected to the indoor units via a refrigerant pipe to drive the indoor units using a first signal as a dedicated line communication signal, a central controller to control operations of the outdoor unit and the indoor units using a second signal, and a communication apparatus to communicate with the central controller, a communication method for the air conditioner via the communication apparatus may include converting by the central controller a control command into a wireless signal (S310), transmitting a wireless signal corresponding to the second signal to at least one of the indoor units and the outdoor unit (S320), converting the wireless signal corresponding to the second signal into the second signal as a dedicated line communication signal, which has a frequency band spaced from that of the first signal (S330), transmitting the converted second signal to at least one of the outdoor unit and the indoor units via the dedicated line using the dedicated line communication method (S340), and transmitting the first signal to at least one of the outdoor unit and the indoor units via a dedicated line using a dedicated line communication method (S350).

The corresponding outdoor unit or indoor unit which receives the control command may operate based on the control command. Here, the wireless communication method may be at least one of wireless LAN, RF communication, Bluetooth, Infrared Data Association (IrDA) communication and the like. Also, examples of the dedicated line communication methods may include serial communication, parallel communication, LAN communication and the like, and generally RS-485 communication method is employed. Hereinafter, description will be given with reference to FIGS. 7 to 9 which show the configuration of an apparatus according to this specification.

Referring to FIG. 7, a pair of first and second indoor units 100a and 100b may be connected to one outdoor unit 200 via a refrigerant pipe 500, and the outdoor unit 200 and the indoor units 100a and 100b may transmit and receive data via a dedicated line 600. A central controller 300 may include a wireless communication unit 310 and be installed adjacent to the second indoor unit 100b. For example, for transmitting a control command to the first indoor unit 100a, the central controller 300 may convert the control command into a wireless signal by the wireless communication unit 310 to transmit to the second indoor unit 100b (S310, S320). A communication apparatus 400 installed in the second indoor unit 100b may convert the wireless signal into a second signal as a dedicated line communication signal (S330). The second indoor unit 100b may transmit the converted second signal, which has a frequency band spaced from that of a first signal, to the outdoor unit 200 via the dedicated line 600 using the dedicated line communication method (S340). The outdoor unit 200 may transmit the first signal to the first indoor unit 100a via the dedicated line 600 using a dedicated line communication method (S350).

Referring to FIG. 8, two pairs of indoor units, namely, first and second indoor units 100a and 100b and third and fourth indoor units 100c and 100d may be connected to a pair of first and second outdoor units 200a and 200b, respectively. The first and second outdoor units 200a and 200b and the second and fourth indoor units 100b and 100d may include a communication apparatus 400, respectively. A central controller 300 may include a wireless communication unit 310 and be installed inside. For example, for transmitting a control command to the indoor unit 100a, the central controller 300 may convert the control command into a wireless signal and transmit the wireless signal to the indoor unit 100d the closest to the central controller 300 using a wireless communication method (S310, S320). The communication apparatus 400 installed in the fourth indoor unit 100d may receive the wireless signal and convert the wireless signal into a second signal as a dedicated line communication signal (S330). The fourth indoor unit 100d may transmit the converted second signal, which has a frequency band spaced from that of the first signal, to the second outdoor unit 200b via the dedicated line 600 using the dedicated line communication method (S340). The second outdoor unit 200b may transmit the first signal to the third indoor unit 100c via the dedicated line 600 using the dedicated line communication method (S350).

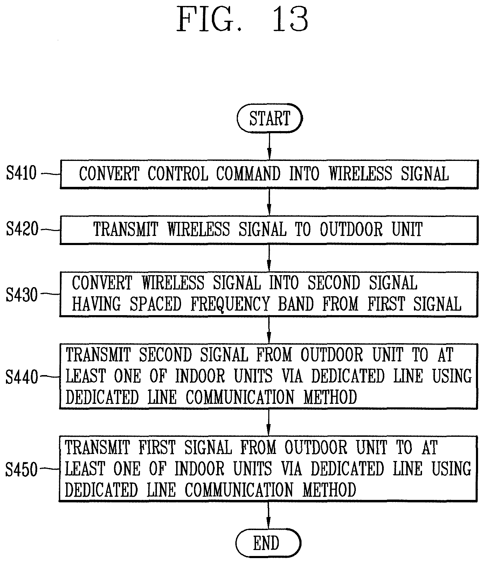

Referring to FIG. 13, in an air conditioner including a plurality of indoor units to perform air conditioning, and at least one outdoor unit connected to the indoor units via a refrigerant pipe to drive the indoor units using a first signal, a communication method for the air conditioner via a communication apparatus performing communication using a second signal, may include converting a control command into a wireless signal (S410), transmitting the wireless signal corresponding to the second signal to the outdoor unit (S420), converting the wireless signal corresponding to the second signal into the second signal, which has a frequency band spaced from that of the first signal (S430), transmitting the converted second signal from the outdoor unit to at least one of the indoor units via a dedicated line using a dedicated line communication method (S440), and transmitting the first signal from the outdoor unit to at least one of the indoor units via the dedicated line 600 using the dedicated line communication method (S450).

Referring to FIG. 8, upon reception of the second signal, the outdoor unit 200b may convert the second signal into a wireless signal to transmit to the first outdoor unit 200a connected to the first indoor unit 100a (S410, S420). The first outdoor unit 200a may convert the wireless signal corresponding to the second signal into the second signal, which has a frequency band spaced from that of the first signal (S430). The first outdoor unit 200a may transmit the converted second signal to the first indoor unit 100a via the dedicated line 600 using the dedicated line communication method (S440). The first outdoor unit 200a may transmit the first signal to the second indoor unit 100b via the dedicated line 600 using the dedicated line communication method (S450).

The foregoing exemplary embodiments have employed the pipe communication method or the dedicated line communication method in addition to the wireless communication method. However, the present disclosure may not be limited to those methods. Alternatively, other wired or wireless communication methods such as a power line communication method and the like may also be employed.

As so far described, as signals with different frequency bands are used for communication between an outdoor unit and an indoor unit or communication between the outdoor unit or indoor unit and a central controller, signal interference can be avoided beforehand, thereby enhancing safety of a system. Also, the outdoor unit or indoor unit may perform communication with the central controller using a plurality of communication methods including a wireless communication method and a dedicated line communication method, thereby reducing limitations due to an installation environment, which results in an increase in efficiency of a system operation.

**Claims**

1. An air conditioner comprising a communication apparatus (400), a plurality of indoor units to perform air conditioning, at least one outdoor unit (200) connected to the indoor units (100) via a refrigerant pipe (500), said communication apparatus being configured to drive the outdoor unit using a first signal, and a central controller (300) to control operations of the outdoor unit (200) and the indoor units (100) using a second signal,

   wherein the communication apparatus (400) is installed in the outdoor unit (200) or one of the indoor units (100) connected to the outdoor unit (200) to perform communication with the central controller (300) using a wireless communication method,

   wherein the communication apparatus (400) is configured to convert the second signal into a wireless signal corresponding to the second signal according to a wireless communication method, or the wireless signal into the second signal according to a preset communication method,

   wherein the communication apparatus (400) is configured to communicate with the outdoor unit (200) or the indoor unit (100) using the first and second signals having frequency bands spaced from each other,

   wherein the communication apparatus is configured to allow communication between the outdoor units (200) by the wireless communication method,

   wherein the communication apparatus (400) is provided in the outdoor unit (200) or the indoor unit (100) which is located the closest to the central controller, and

   wherein the central controller (300) is configured to transmit and receive the wireless signal to and from an outdoor unit (200) or indoor unit (100) located the closest thereto.

2. The apparatus of claim 1, wherein the communication apparatus comprises:

   a wireless communication unit (410) to perform communication with the central controller (300) using a wireless communication method;
   a signal converting unit to convert the second signal into a wireless signal corresponding to the second signal according to the wireless communication method, or the wireless signal into the second signal according to a preset communication method.; and
   a communication unit to communicate with the outdoor unit (200) or the indoor unit (100) using the first and second signals according to the preset communication method.

3. The apparatus of claim 2, wherein the communication unit is a pipe communication unit (430) to perform communication using the first and second signals according to a pipe communication method, wherein the pipe communication unit (430) comprises:

   a data transmission/reception portion (431) to receive or transmit data from or to the outdoor unit or the indoor unit; and
   a pipe communication signal converter (432) to convert the data into a pipe communication signal or the pipe communication signal into the data.

4. The apparatus of claim 3, wherein the pipe communication unit (430) further comprises:

a pipe communication signal connection portion (434) to connect the pipe communication signal to the refrigerant pipe (500); and
a pipe communication signal coupling portion (433) positioned between the pipe communication signal converter (432) and the pipe communication signal connection portion (434) to filter the pipe communication signal and block noise and serge.

5. The apparatus of claim 4, wherein the communication unit is a dedicated line communication unit to perform communication using the first and second signals according to a dedicated line communication method.

6. A communication method for an air conditioner performed via a communication apparatus (400), the air conditioner comprising a plurality of indoor units (100) to perform air conditioning, at least one outdoor unit (200) connected to the indoor units (100) via a refrigerant pipe (500) to drive the indoor units (100) using a first signal, a central controller (300) to control operations of the outdoor unit (200) and the indoor units (100) using a second signal, and the communication apparatus (400) to perform communication with the central controller (300), the method comprising:

converting by the central controller (300) a control command into a wireless signal;
transmitting the wireless signal corresponding to the second signal to at least one of the outdoor unit (200) and the indoor units (100);
receiving the wireless signal corresponding to the second signal to convert into the second signal, the second signal having a frequency band spaced from that of the first signal;
transmitting the second signal to at least one of the outdoor unit (200) and the indoor units (100); and
transmitting the first signal to at least one of the outdoor unit (200) and the indoor units (100); and
wherein the communication apparatus (400) is configured to allow communication between the outdoor units (200) by the wireless communication method,
wherein the communication apparatus is provided in the outdoor unit (200) or the indoor unit (100) which is located the closest to the central controller (300), and

wherein the central controller (300) is configured to transmit and receive the wireless signal to and from an outdoor unit (200) or indoor unit (100) located the closest thereto.

**Patentansprüche**

1. Klimaanlage, die eine Kommunikationsvorrichtung (400), mehrere Inneneinheiten, um eine Klimatisierung durchzuführen, mindestens eine Außeneinheit (200), die durch eine Kältemittelrohrleitung (500) mit den Inneneinheiten (100) verbunden ist, wobei die Kommunikationsvorrichtung konfiguriert ist, die Außeneinheit mittels eines ersten Signals anzusteuern, und eine zentrale Steuereinrichtung (300), um den Betrieb der Außeneinheit (200) und der Inneneinheiten (100) mittels eines zweiten Signals zu steuern, aufweist,
wobei die Kommunikationsvorrichtung (400) in der Außeneinheit (200) oder einer der mit der Außeneinheit (200) verbundenen Inneneinheiten (100) eingebaut ist, um eine Kommunikation mit der zentralen Steuereinrichtung (300) mittels eines drahtlosen Kommunikationsverfahrens durchzuführen,
wobei die Kommunikationsvorrichtung (400) konfiguriert ist, das zweite Signal in ein drahtloses Signal, das dem zweiten Signal entspricht, gemäß einem drahtlosen Kommunikationsverfahren oder das drahtlose Signal in das zweite Signal gemäß einem voreingestellten Kommunikationsverfahren umzuwandeln,
wobei die Kommunikationsvorrichtung (400) konfiguriert ist, mit der Außeneinheit (200) oder der Inneneinheit (100) mittels des ersten und zweiten Signals zu kommunizieren, die voneinander beabstandete Frequenzbänder aufweisen,
wobei die Kommunikationsvorrichtung konfiguriert ist, eine Kommunikation zwischen den Außeneinheiten (200) durch das drahtlose Kommunikationsverfahren zu ermöglichen,
wobei die Kommunikationsvorrichtung (400) in der Außeneinheit (200) oder der Inneneinheit (100) vorgesehen ist, die am nächsten zur zentralen Steuereinrichtung angeordnet ist, und
wobei die zentrale Steuereinrichtung (300) konfiguriert ist, das drahtlose Signal an und von einer Außeneinheit (200) oder Inneneinheit (100) zu senden und empfangen, die am nächsten zu ihr angeordnet ist.

2. Vorrichtung nach Anspruch 1, wobei die Kommunikationsvorrichtung aufweist:

eine drahtlose Kommunikationseinheit (410), um eine Kommunikation mit der zentralen Steuereinrichtung (300) mittels eines drahtlosen Kommunikationsverfahrens durchzuführen;

eine Signalumwandlungseinheit, um das zweite Signal in ein drahtloses Signal, das dem zweiten Signal entspricht, gemäß dem drahtlosen Kommunikationsverfahren oder das drahtlose Signal gemäß einem voreingestellten Kommunikationsverfahren in das zweite Signal umzuwandeln; und

eine Kommunikationseinheit, um mit der Außeneinheit (200) oder der Inneneinheit (100) mittels des ersten und zweiten Signals gemäß dem voreingestellten Kommunikationsverfahren zu kommunizieren.

3. Vorrichtung nach Anspruch 2, wobei die Kommunikationseinheit eine Rohrleitungskommunikationseinheit (430) ist, um eine Kommunikation mittels des ersten und zweiten Signals gemäß einem Rohrleitungskommunikationsverfahren durchzuführen, wobei die Rohrleitungskommunikationseinheit (430) aufweist:

einen Datensende-/Empfangsabschnitt (431), um Daten von oder an die Außeneinheit oder die Inneneinheit zu empfangen oder zu senden; und

eine Rohrleitungskommunikationssignalwandler (432), um die Daten in ein Rohrleitungskommunikationssignal oder das Rohrleitungskommunikationssignal in die Daten umzuwandeln.

4. Vorrichtung nach Anspruch 3, wobei die Rohrleitungskommunikationseinheit (430) ferner aufweist:

einen Rohrleitungskommunikationssignal-Verbindungsabschnitt (434), um das Rohrleitungskommunikationssignal mit der Kältemittelrohrleitung (500) zu verbinden; und

einen Rohrleitungskommunikationssignal-Kopplungsabschnitt (433), der zwischen dem Rohrleitungskommunikationssignalwandler (432) und dem Rohrleitungskommunikationssignal-Verbindungsabschnitt (434) angeordnet ist, um das Rohrleitungskommunikationssignal zu filtern und Rauschen und Spannungsspitzen zu sperren.

5. Vorrichtung nach Anspruch 4, wobei die Kommunikationseinheit eine dedizierte Leitungskommunikationseinheit ist, um eine Kommunikation mittels des ersten und zweiten Signals gemäß einem dedizierten Leitungskommunikationsverfahren durchzuführen.

6. Kommunikationsverfahren für eine Klimaanlage, das durch eine Kommunikationsvorrichtung (400) ausgeführt wird, wobei die Klimaanlage mehrere Inneneinheiten (100), um eine Klimatisierung durchzuführen, mindestens eine Außeneinheit (200), die mit den Inneneinheiten (100) durch eine Kältemittelrohrleitung (500) verbunden ist, um die Inneneinheiten (100) mittels eines ersten Signals anzusteuern, eine zentrale Steuereinrichtung (300), um den Betrieb der Außeneinheit (200) und der Inneneinheiten (100) mittels eines zweiten Signals zu steuern, und die Kommunikationsvorrichtung (400) aufweist, um eine Kommunikation mit der zentralen Steuereinrichtung (300) durchzuführen, wobei das Verfahren aufweist:

Umwandeln durch die zentrale Steuereinrichtung (300) eines Steuerbefehls in ein drahtloses Signal;
Senden des drahtlosen Signals, das dem zweiten Signal entspricht, an die Außeneinheit (200) und/oder die Inneneinheiten (100);
Empfangen des drahtlosen Signals, das dem zweiten Signal entspricht, um es in das zweite Signal umzuwandeln, wobei das zweite Signal ein Frequenzband aufweist, das von dem des ersten Signals beabstandet ist;
Senden des zweiten Signals an die Außeneinheit (200) und/oder die Inneneinheiten (100); und
Senden des ersten Signals an die Außeneinheit (200) und/oder die Inneneinheiten (100); und
wobei die Kommunikationsvorrichtung (400) konfiguriert ist, eine Kommunikation zwischen den Außeneinheiten (200) durch das drahtlosen Kommunikationsverfahren zu ermöglichen, wobei die Kommunikationsvorrichtung in der Außeneinheit (200) oder der Inneneinheit (100) vorgesehen ist, die am nächsten zur zentralen Steuereinrichtung (300) angeordnet ist, und wobei die zentrale Steuereinrichtung (300) konfiguriert ist, das drahtlose Signal an und von einer Außeneinheit (200) oder Inneneinheit (100) zu senden und empfangen, die am nächsten zu ihr angeordnet ist.

**Revendications**

1. Climatiseur comprenant un dispositif de communication (400),
une pluralité d'unités intérieures pour effectuer une climatisation d'air, au moins une unité extérieure (200) reliée aux unités intérieures (100) par une conduite de réfrigérant (500), le dispositif de communication étant prévu pour entraîner l'unité extérieure au moyen d'un premier signal, et un contrôleur central (300) pour commander le fonctionnement de l'unité extérieure (200) et des unités intérieures (100) au moyen d'un deuxième signal,
où le dispositif de communication (400) est monté dans l'unité extérieure (200) ou une des unités intérieures (100) reliées à l'unité extérieure (200) pour établir une communication avec le contrôleur central (300) au moyen d'un procédé de communication sans fil,

où le dispositif de communication (400) est prévu pour convertir le deuxième signal en un signal radio correspondant au deuxième signal conformément à un procédé de communication sans fil, ou le signal radio en deuxième signal conformément à un procédé de communication défini,

où le dispositif de communication (400) est prévu pour communiquer avec l'unité extérieure (200) ou l'unité intérieure (100) au moyen du premier et du deuxième signaux ayant des bandes de fréquence espacées l'une de l'autre,

où le dispositif de communication est prévu pour permettre une communication entre les unités extérieures (200) au moyen du procédé de communication sans fil,

où le dispositif de communication (400) est prévu dans l'unité extérieure (200) ou l'unité intérieure (100) la plus proche du contrôleur central, et

où le contrôleur central (300) est prévu pour transmettre le signal radio à l'unité extérieure (200) ou à l'unité intérieure (100) la plus proche de lui, ou à le recevoir de celle-ci.

2. Dispositif selon la revendication 1, où le dispositif de communication comprend :

une unité de communication sans fil (410) pour établir une communication avec le contrôleur central (300) au moyen d'un procédé de communication sans fil ;

une unité de conversion de signal pour convertir le deuxième signal en un signal radio correspondant au deuxième signal conformément au procédé de communication sans fil, ou le signal radio en deuxième signal conformément à un procédé de communication défini ; et

une unité de communication pour communiquer avec l'unité extérieure (200) ou l'unité intérieure (100) au moyen du premier et du deuxième signaux conformément au procédé de communication défini.

3. Dispositif selon la revendication 2, où l'unité de communication est une unité de communication de conduite (430) pour établir une communication au moyen du premier et du deuxième signaux conformément à un procédé de communication de conduite, ladite unité de communication de conduite (430) comprenant :

une section de transmission/de réception de données (431) pour recevoir des données de l'unité extérieure ou de l'unité intérieure ou les transmettre à celle-ci ; et

un convertisseur de signal de communication de conduite (432) pour convertir les données en signal de communication de conduite, ou le signal de communication de conduite en données.

4. Dispositif selon la revendication 3, où l'unité de communication de conduite (430) comprend en outre :

une section de connexion de signal de communication de conduite (434) pour connecter le signal de communication de conduite à la conduite de réfrigérant (500) ; et

une section de couplage de signal de communication de conduite (433) disposée entre le convertisseur de signal de communication de conduite (432) et la section de connexion de signal de communication de conduite (434) pour filtrer le signal de communication de conduite, supprimer les bruits et protéger contre les surtensions.

5. Dispositif selon la revendication 4, où l'unité de communication est une unité de communication de ligne dédiée pour l'établissement d'une communication au moyen du premier et du deuxième signaux conformément à un procédé de communication de ligne dédiée.

6. Procédé de communication pour un climatiseur exécuté par un dispositif de communication (400), ledit climatiseur comprenant une pluralité d'unités intérieures (100) pour effectuer une climatisation d'air, au moins une unité extérieure (200) reliée aux unités intérieures (100) par une conduite de réfrigérant (500) pour entraîner les unités intérieures (100) au moyen d'un premier signal, un contrôleur central (300) pour commander le fonctionnement de l'unité extérieure (200) et des unités intérieures (100) au moyen d'un deuxième signal, et le dispositif de communication (400) pour établir une communication avec le contrôleur central (300), ledit procédé comprenant :

la conversion par le contrôleur central (300) d'une instruction de commande en un signal radio ;

la transmission du signal radio correspondant au deuxième signal à au moins une unité entre l'unité extérieure (200) et les unités intérieures (100) ;

la réception du signal radio correspondant au deuxième signal à convertir en deuxième signal, ledit deuxième signal ayant une bande de fréquence espacée de celle du premier signal ;

la transmission du deuxième signal à au moins une unité entre l'unité extérieure (200) et les unités intérieures (100) ; et

la transmission du premier signal à au moins une unité entre l'unité extérieure (200) et les unités intérieures (100) ; et

où le dispositif de communication (400) est prévu pour permettre une communication entre les unités extérieures (200) au moyen du procédé de communication sans fil,

où le dispositif de communication est prévu dans l'unité extérieure (200) ou l'unité intérieure (100) la plus proche du contrôleur central (300), et

où le contrôleur central (300) est prévu pour transmettre le signal radio à une unité extérieure (200) ou une unité intérieure (100) la plus proche de lui, ou à le recevoir de celle-ci.

# FIG. 1

300

CENTRAL CONTROLLER

200 — OUTDOOR UNIT

OUTDOOR UNIT · · · OUTDOOR UNIT

200      200

100

INDOOR UNIT

INDOOR UNIT

INDOOR UNIT

# FIG. 2

400   200

PIPE COMMUNICATION SIGNAL(FIRST SIGNAL)

WIRELESS SIGNAL

PIPE COMMUNICATION SIGNAL (SECOND SIGNAL)

500

310   300

CENTRAL CONTROLLER

100a     100b

# FIG. 3

PIPE COMMUNICATION SIGNAL
(FIRST SIGNAL)

PIPE COMMUNICATION SIGNAL
(SECOND SIGNAL)

WIRELESS
SIGNAL

CENTRAL
CONTROLLER

# FIG. 4

PIPE COMMUNICATION SIGNAL
(FIRST SIGNAL)

PIPE COMMUNICATION SIGNAL
(SECOND SIGNAL)

WIRELESS
SIGNAL

PIPE COMMUNICATION SIGNAL
(FIRST SIGNAL)

PIPE COMMUNICATION SIGNAL
(SECOND SIGNAL)

WIRELESS
SIGNAL

CENTRAL
CONTROLLER

# FIG. 5A

COLLISION BETWEEN DATA

SIZE OF SIGNAL

CENTRAL CONTROLLER

INDOOR UNIT OR OUTDOOR UNIT

TIME

# FIG. 5B

PARALLEL COMMUNICATION

SIZE OF SIGNAL

CENTRAL CONTROLLER

INDOOR UNIT OR OUTDOOR UNIT

TIME

# FIG. 6

# FIG. 7

PIPE COMMUNICATION SIGNAL
(FIRST SIGNAL)

PIPE COMMUNICATION
SIGNAL(SECOND SIGNAL)

WIRELESS
SIGNAL

CENTRAL
CONTROLLER

# FIG. 8

# FIG. 9

EP 2 665 975 B1

# FIG. 10

START

S110 — CONVERT BY CENTRAL CONTROLLER CONTROL COMMAND INTO WIRELESS SIGNAL

S120 — TRANSMIT WIRELESS SIGNAL TO AT LEAST ONE OF OUTDOOR UNIT AND INDOOR UNITS

S130 — CONVERT WIRELESS SIGNAL INTO SECOND SIGNAL HAVING SPACED FREQUENCY BAND FROM FIRST SIGNAL

S140 — TRANSMIT SECOND SIGNAL AS PIPE COMMUNIATION SIGNAL TO AT LEAST ONE OF OUTDOOR UNIT AND INDOOR UNITS VIA REFRIGERANT PIPE

S150 — TRANSMIT FIRST SIGNAL AS PIPE COMMUNICATION SIGNAL TO AT LEAST ONE OUTDOOR UNIT AND INDOOR UNITS VIA REFRIGERANT PIPE

END

# FIG. 11

```
                        ( START )
                            │
                            ▼
        ┌──────────────────────────────────────────────┐
S210 ───┤ CONVERT CONTROL COMMAND INTO WIRELESS         │
        │ SIGNAL                                        │
        └──────────────────────────────────────────────┘
                            │
                            ▼
        ┌──────────────────────────────────────────────┐
S220 ───┤ TRANSMIT WIRELESS SIGNAL TO OUTDOOR UNIT      │
        └──────────────────────────────────────────────┘
                            │
                            ▼
        ┌──────────────────────────────────────────────┐
        │ CONVERT WIRELESS SIGNAL INTO SECOND SIGNAL    │
S230 ───┤ HAVING SPACED FREQUENCY BAND FROM FIRST       │
        │ SIGNAL                                        │
        └──────────────────────────────────────────────┘
                            │
                            ▼
        ┌──────────────────────────────────────────────┐
        │ TRANSMIT SECOND SIGNAL FROM OUTDOOR UNIT TO   │
S240 ───┤ AT LEAST ONE OF INDOOR UNITS VIA REFRIGERANT  │
        │ PIPE USING PIPE COMMUNICATION METHOD          │
        └──────────────────────────────────────────────┘
                            │
                            ▼
        ┌──────────────────────────────────────────────┐
        │ TRANSMIT FIRST SIGNAL FROM OUTDOOR UNIT TO    │
S250 ───┤ AT LEAST ONE OF INDOOR UNITS VIA REFRIGERANT  │
        │ PIPE USING PIPE COMMUNICATION METHOD          │
        └──────────────────────────────────────────────┘
                            │
                            ▼
                        (  END  )
```

# FIG. 12

START

S310 — CONVERT BY CENTRAL CONTROLLER CONTROL COMMAND INTO WIRELESS SIGNAL

S320 — TRANSMIT WIRELESS SIGNAL TO AT LEAST ONE OF OUTDOOR UNIT AND INDOOR UNITS

S330 — CONVERT WIRELESS SIGNAL INTO SECOND SIGNAL HAVING SPACED FREQUENCY BAND FROM FIRST SIGNAL

S340 — TRANSMIT SECOND SIGNAL TO AT LEAST ONE OF OUTDOOR UNIT AND INDOOR UNITS VIA REFRIGERANT PIPE USING DEDICATED LINE COMMUNICATION METHOD

S350 — TRANSMIT FIRST SIGNAL TO AT LEAST ONE OF OUTDOOR UNIT AND INDOOR UNITS VIA REFRIGERANT PIPE USING DEDICATED LINE COMMUNICATION METHOD

END

# FIG. 13

START

S410 — CONVERT CONTROL COMMAND INTO WIRELESS SIGNAL

S420 — TRANSMIT WIRELESS SIGNAL TO OUTDOOR UNIT

S430 — CONVERT WIRELESS SIGNAL INTO SECOND SIGNAL HAVING SPACED FREQUENCY BAND FROM FIRST SIGNAL

S440 — TRANSMIT SECOND SIGNAL FROM OUTDOOR UNIT TO AT LEAST ONE OF INDOOR UNITS VIA DEDICATED LINE USING DEDICATED LINE COMMUNICATION METHOD

S450 — TRANSMIT FIRST SIGNAL FROM OUTDOOR UNIT TO AT LEAST ONE OF INDOOR UNITS VIA DEDICATED LINE USING DEDICATED LINE COMMUNICATION METHOD

END

**EP 2 665 975 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20090044776